Europäisches Patentamt

(19) European Patent Office

Office européen des brevets

(11) Publication number: **0 036 706**
**B1**

## (12) EUROPEAN PATENT SPECIFICATION

(45) Date of publication of patent specification: **06.07.83**

(51) Int. Cl.³: **B 62 D 43/04**

(21) Application number: **81300637.6**

(22) Date of filing: **17.02.81**

(54) Spare wheel carrier for a motor vehicle.

(30) Priority: **22.03.80 GB 8009759**

(43) Date of publication of application:
**30.09.81 Bulletin 81/39**

(45) Publication of the grant of the patent:
**06.07.83 Bulletin 83/27**

(84) Designated Contracting States:
**DE FR GB IT NL SE**

(56) References cited:
**DE - A - 2 407 231**
**US - A - 3 874 536**
**US - A - 3 952 894**
**US - A - 4 059 197**

(73) Proprietor: **FORD MOTOR COMPANY LIMITED**
**Eagle Way**
**Brentwood Essex CM13 3BW (GB)**
(84) **GB IT NL SE**
(73) Proprietor: **FORD-WERKE AKTIENGESELLSCHAFT**
**Ottoplatz 2 Postfach 21 03 69**
**D-5000 Köln 21 (DE)**
(84) **DE**
(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Hamlyn, Nigel Camden**
**Blacklands**
**Sparkwell Plymouth Devon PL75DF (GB)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England

Spare wheel carrier for a motor vehicle

This invention relates to spare wheel carriers for motor vehicles, especially trucks.

Conventional spare wheel carriers comprise a spindle mounted for rotation on the frame of the vehicle, a cable wound around the spindle and releasably connected at its free end to the spare wheel, whereby rotation of the spindle in one direction lowers the wheel from the vehicle, and a releasable ratchet for normally preventing rotation of the spindle in a direction in which the cable is unwound. In one known arrangement, the ratchet comprises a ratchet wheel on the spindle and a pawl which is spring biased into engagement with the ratchet wheel to allow the cable to be wound on to, but not from the spindle. In order to unwind the cable and to lower the wheel, the pawl is disengaged from the ratchet wheel, for example by using a tommy bar, whereupon the wheel falls to the ground under its own weight.

Since the wheel of a truck is relatively heavy, uncontrolled movement of the wheel during lowering can be dangerous.

According to the present invention there is provided a spare wheel carrier for a motor vehicle comprising a spindle adapted to be rotatably mounted on a vehicle frame, a cable wound around the spindle and adapted at its free end to be secured to a vehicle wheel, and a releasable ratchet for normally preventing the spindle from rotating in a direction in which the cable would unwind therefrom, characterised in that the releasable ratchet comprises an escapement movable between first and second engaged positions thereby to permit rotation of the spindle in the said direction in steps.

By using an escapement to control the movement of the spindle, the wheel may be safely lowered from the vehicle in a controlled manner.

Preferably the escapement comprises a ratchet wheel rotatable with the spindle and an anchor having two stop surfaces, each of which engages a tooth of the ratchet wheel when the other is disengaged therefrom, the anchor being reciprocable relative to the ratchet wheel between two positions in which respective ones of the stop surfaces engage the ratchet wheel. By mounting the anchor for reciprocating movement rather than pivotal movement, the space occupied by the escapement can be in relation to the travel of the anchor.

Conveniently, the anchor has an orifice which overlies a similar orifice in a backing plate whereby the anchor may be moved relative to the backing plate by means of a lever engaged in the orifices.

A preferred embodiment of the invention will now be described, by way of example only, with reference to the drawings, in which:—

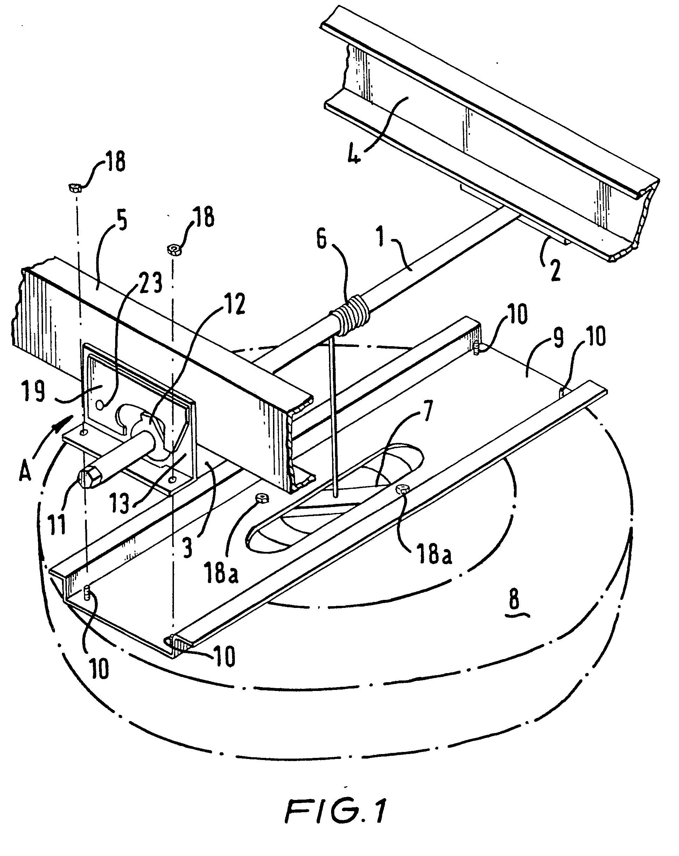

Figure 1 is a perspective view of a spare wheel carrier in accordance with the invention;

Figure 2 is an elevation, on an enlarged scale of part of the carrier taken in the direction of the arrow A of Figure 1; and

Figure 3 is a transverse cross section of the carrier taken along line III—III of Figure 2.

Referring to the drawings, a spare wheel carrier for a motor vehicle comprises a spindle 1 rotatably mounted in bearing brackets 2, 3 secured to the underside of the chassis members 4, 5 of the vehicle. A cable 6 is fixed to the mid-point of the spindle 1 and at its free end carries a cross-bar 7 which includes two upstanding threaded mounting studs which are positioned to project upwardly through two diametrically-opposed wheel-mounting holes in a wheel 8. The cross-bar 7 and the cable 6 pass through an aperture in the centre of a wheel support beam 9 which carries four upstanding threaded studs 10 carrying nuts 18 by means of which the beam 9 is bolted to the bearing brackets 2, 3. The cross-bar 7 is itself bolted to the beam 9 by means of nuts 18a on the mounting studs, which pass through bolt holes in the beam 9.

The spindle 1 has a hexagonal head 11 at one end for engagement by a socketed winding handle (not shown).

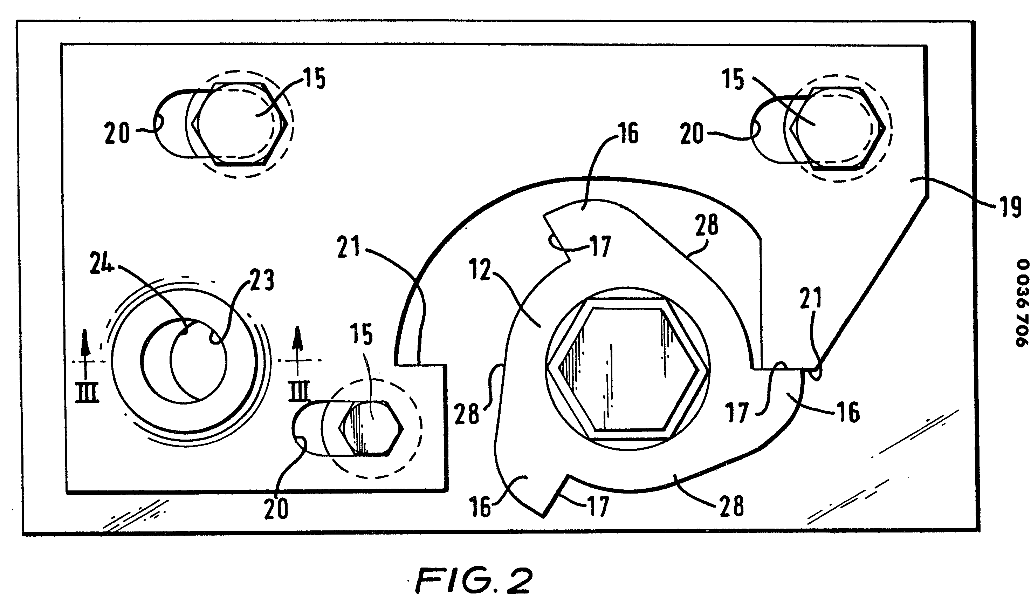

A ratchet wheel 12 is secured to the spindle 1 adjacent a backing plate 13 which, as best seen in Figure 2, is bolted to one of the chassis members, 4, 5 of the vehicle by three bolts 15.

The ratchet wheel 12 includes three teeth 16, each of which defines a radial abutment surface 17. The radius of the ratchet wheel increases progressively in an anti-clockwise direction from the inner end of each abutment surface to the outer end of the next abutment surfaces, thereby forming cam surfaces 28 between adjacent teeth.

An anchor plate 19 is mounted on the three bolts 15, which pass through slots 20 in the plate 19 so that the anchor plate 19 can be reciprocated between two terminal positions relative to the backing plate 13 by washers mounted on the bolts 15 to prevent the plate 19 from seizing on to the backing plate 13 as a result of corrosion.

The anchor plate 19 includes two stop surfaces 21 each of which lies along a radius from the ratchet wheel 12. The stop surfaces 21 are so spaced that in each terminal position of the anchor plate, one stop surface 21 is in engagement with an abutment surface 17 of one of the teeth 16, whilst the other is disengaged from the teeth 16.

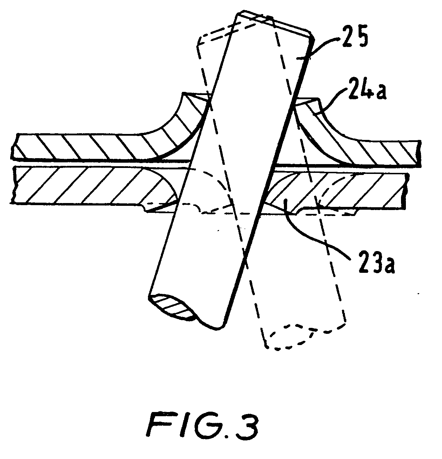

An aperture 23 in the anchor plate 19 overlies a similarly-sized aperture 24 in the backing plate when the anchor-plate is midway between the two terminal positions. This enables the anchor plate to be moved between the two terminal positions by inserting a lever 25, such as a wheel brace or jack handle into the two apertures 23, 24, as seen in Figure 3, and moving the lever from side to side, as indicated by the full-lines and broken lines in Figure 3. The apertures 23, 24 are of a size sufficient to allow the lever 25 to be inserted when the plate 19 is in either terminal positions. The edges of the apertures 23 and 24 are provided with turned-over flanges 23a, 24a to assist this operation.

In order to remove the wheel from the carrier, the four nuts 18 securing the wheel support beam 9 are removed, releasing the beam 9, wheel 8 and cross-bar 7 from the chassis members 4, 5. The lever 25 is then inserted into the apertures 23, 24 and operated so as to reciprocate the plate 25 between its end positions. At each reciprocation, one of the stop surfaces 21 is disengaged from a tooth 16 on the ratchet wheel 12, which permits the spindle to rotate until the next tooth 16 comes into engagement with the other stop surface, thereby partly unwinding the cable 6. In this way the wheel 8, beam 9 and cross-bar 7 are gradually lowered to the ground. The nuts 18a are then removed, releasing the cross-bar 7 from the beam 9 and the cross-bar 7 is then manipulated through the centre of the wheel 8 and the beam 9, allowing the wheel to be removed.

In order to replace the wheel in the carrier, the beam 9 is laid across the wheel 8; the cross bar is passed through the beam 9 and the centre of the wheel 8 and the three components are secured together by the nuts 18a. The assembly is then raised by winding the spindle using a winding handle (not shown) on the hexagonal head of the spindle. During this movement, the anchor plate is reciprocated as a result of the engagement of the cam surfaces 28 on the ratchet wheel 12 with the stop surfaces on the anchor plate 19.

When the wheel has been raised, the beam 9 is secured to the chassis members 4, 5 by means of the nuts 18 on the studs 10.

The embodiment of the invention described above therefore provides a wheel carrier of simple and robust construction which is easy to operate and which ensures that the spare wheel 8 is lowered to the ground in a safe and controlled manner.

## Claims

1. A spare wheel carrier for a motor vehicle comprising a spindle (1) adapted to be rotatably mounted on a vehicle frame (4, 5), a cable (6) wound around the spindle (1) and adapted at its free end to be secured to a vehicle wheel (8), and a releasable ratchet (12, 19) for normally preventing the spindle (1) from rotating in a direction in which the cable would unwind therefrom, characterised in that the releasable ratchet (12, 19) comprises an escapement (19, 17, 21) movable between first and second engaged positions thereby to permit rotation of the spindle (1) in the said direction in steps.

2. A spare wheel carrier according to Claim 1 wherein the escapement comprises a ratchet wheel (12) rotatable with the spindle (1), and an anchor (19) having two stop surfaces (21, 21) each of which engages a tooth (16, 16, 16) of the ratchet wheel (12) when the other is disengaged therefrom, the anchor (19) being reciprocable between two positions in which respective ones of the stop surfaces (21, 21) engage the ratchet wheel.

3. A spare wheel carrier according to Claim 2 wherein the anchor (19) has an orifice (23) which overlies an orifice (24) in a backing plate. (13) relative to which the anchor (19) is movable, whereby movement of the anchor (19) may be effected by means of a lever (25) engaged in the two orifices (23, 24).

## Revendications

1. Support de roue de secours pour véhicule à moteur comprenant un arbre (1) monté à rotation sur un châssis de véhicule (4, 5), un câble (6) envidé autour de l'arbre (1) et pouvant être fixé par son extrémité libre à une roue de véhicule (8), et un mécanisme d'encliquetage libérable (12, 19) destiné à empêcher normalement l'abre (1) de tourner dans un sens correspondant au dévidage du câble, caractérisé en ce que le mécanisme d'encliquetage libérable (12, 19) comprend un échappement (19, 17, 21) mobile entre une première et une seconde position d'encliquetage de manière à permettre à l'arbre (1) de tourner cran par cran dans la dite direction.

2. Support de roue de secours suivant la revendication 1, caractérisé en ce que l'échappement comprend une roue d'échappement (12) pouvant tourner avec l'arbre (1) et un élément de blocage (19) comportant deux surfaces d'arrêt (21, 21) qui viennent chacune en contact avec une dent (16, 16, 16) de la roue d'échappement (12) lorsque l'autre en est degagée, l'élément de blocage (19) pouvant se déplacer en un mouvement de va-et-vient entre deux positions dans chacune desquelles une des surfaces d'arrêt (21, 21) est en contact avec la roue d'échappement.

3. Support de roue de secours suivant la revendication 2, caractérisé en ce que l'élément de blocage (19) comporte un orifice (23) qui recouvre un orifice (24) prévu dans une plaque d'appui (13) par rapport à laquelle l'élément de blocage (19) est mobile, de sorte que le déplacement de l'élément de blocage (19) peut être effectué au moyen d'un levier (25) engagé dans les deux orifices (23, 24).

## Patentansprüche

1. Ersatzradträger für Motorfahrzeuge, bestehend aus einer an einem Fahrzeugrahmen (4, 5) drehbar anbringbaren Spindel (1), einem um die Sindel (1) gewickelten und an seinem freien Ende an einem Fahrzeugrad (8) befestigbaren

**0 036 706**

Kabel (6) und einer lösbaren Sperrklinke (12, 19), um normalerweise eine Drehung der Spindel (1) in einer Richtung, in der sich das Kabel von dieser abwickeln würde, zu verhindern, dadurch gekennzeichnet, dass die lösbare Sperrklinke (12, 19) aus einer zwischen ersten und zweiten Raststellungen beweglichen Hemmung (19, 17, 21) besteht, um so eine stufenweise Drehung der Spindel (1) in jener Richtung zu ermöglichen.

2. Ersatzradträger nach Anspruch 1, worin die Hemmung aus einem mit der Spindel (1) drehbaren Klinkenrad (12) und einem Anker (19) mit zwei Anschlagflächen (21, 21) besteht, von denen jeweils eine mit einem Zahn (16, 16, 16) des Klinkenrads (12) in Eingriff kommt, wenn die andere ausser Eingriff ist, wobei der Anker (19) zwischen zwei Stellungen, in denen jeweils eine der Anschlagflächen (21, 21) mit dem Klinkenrad in Eingriff steht, hin und her beweglich ist.

3. Ersatzradträger nach Anspruch 2, worin der Anker (19) eine Oeffnung (23) besitzt, die über einer Oeffnung (24) in einer Stützplatte (13) liegt, bezüglich derer der Anker (19) beweglich ist, so dass sich der Anker (19) mittels eines in die beiden Oeffnungen (23, 24) eingesetzten Hebels (25) bewegen lässt.

0 036 706

FIG.1

1

FIG.2

FIG. 3